# EUROPÄISCHE PATENTSCHRIFT

(11) **EP 0 992 208 B1**
(45) Veröffentlichungstag und Bekanntmachung des Hinweises auf die Patenterteilung: **24.09.2003**
(21) Anmeldenummer: 99810825.2
(22) Anmeldetag: 16.09.1999
(51) Int. Cl.: A47J 42/18, A47J 42/20

(54) **Mühle, insbesondere für Pfeffer oder Salz**
Mill, in particular for pepper and salt
Moulin, en particulier pour du poivre ou du sel

(30) Priorität: 05.10.1998 CH 202198
(43) Veröffentlichungstag der Anmeldung: 12.04.2000
(73) Patentinhaber: Zyliss AG, 3250 Lyss (CH)
(72) Erfinder: Weibel, Hans, 3054 Schüpfen (CH)
(74) Vertreter: BOVARD AG - Patentanwälte

(56) Entgegenhaltungen:
- EP-A- 0 019 931
- DE-A- 2 622 143
- DE-A- 3 503 011
- DE-C- 475 615
- FR-A- 1 253 288

## Beschreibung

Die vorliegende Erfindung bezieht sich auf eine Mühle, insbesondere für Pfeffer oder Salz, mit einem mittleren Gehäuseteil zur Aufnahme des Mahlgutes und einem oberen Teil zur Betätigung des Mahlwerks und mit einem Befestigungs- und Verstellorgan zur Befestigung des oberen Teils und zur Einstellung des Mahlgrades, wobei unten am mittleren Gehäuseteil eine obere Mahlscheibe angeordnet ist.

Bekannte Pfeffer- oder Salzmühlen weisen den Nachteil auf, dass das Mahlwerk nicht auf einfache Art und Weise gereinigt werden kann. Im weiteren kann nicht genügend feines Mahlgut erzeugt werden.

Das Dokument FR1253288 zeigt eine Mühle mit einem Gehäuseteil, an dem eine obere Mahlscheibe angeordnet ist. Eine untere Mahlscheibe ist von unten abnehmbar, beispielsweise zwecks reinigung. Das Abnehmen der unteren Mahlscheibe gestalötet sich aber schwierig und die obere Mahlscheibe ist auch bei abgenommener unterer Mahlscheibe nur schwer zugänglich.

Es ist deshalb eine Aufgabe der vorliegenden Erfindung, die Nachteile des Standes der Technik zu vermeiden und eine Mühle, insbesondere für Pfeffer oder Salz zu schaffen, bei welcher das Mahlwerk leicht gereinigt werden und ein feines Mahlgut erzeugt werden kann.

Dies wird erfindungsgemäss dadurch erreicht, dass unten am mittleren Gehäuseteil ein abnehmbar befestigbarer unterer Gehäuseteil vorgesehen ist, auf dem eine untere Mahlscheibe, die über ein Verbindungsorgan mit dem Befestigungs- und Verstellorgan lösbar verbunden ist, drehbar gelagert ist.

Weitere Aufgaben werden durch Merkmale der abhängigen Ansprüche gelöst, aus welchen sich bevorzugte Ausführungsformen der Erfindung ergeben.

Im folgenden wird anhand der beiliegenden Zeichnung ein Ausführungsbeispiel der Erfindung sowie dessen Verwendung näher beschrieben. Es zeigen
Fig. 1 eine Gesamtansicht der Pfeffer- oder Salzmühle,
Fig. 2 eine Ansicht von unten der Pfeffer- oder Salzmühle,
Fig. 3 einen Längsschnitt durch die gesamte Pfeffer- oder Salzmühle,
Fig. 4 einen Schnitt durch den Unterteil und teilweise durch den Mittelteil der Mühle,
Fig. 5 den Unterteil der Mühle und die untere Keramikmahlscheibe mit der Drehachse,
Fig. 6 Schnitte durch Teile der Mühle in Explosionsdarstellung,
Fig. 7 alle Teile der Mühle in perspektivischer Explosionsansicht,
Fig. 8 eine perspektivische Darstellung einer der beiden identischen Mahlscheiben,
Fig. 9 einen Schnitt durch die untere Mahlscheibe mit Drehachse,
Fig. 10 eine Draufsicht auf die untere Mahlscheibe.

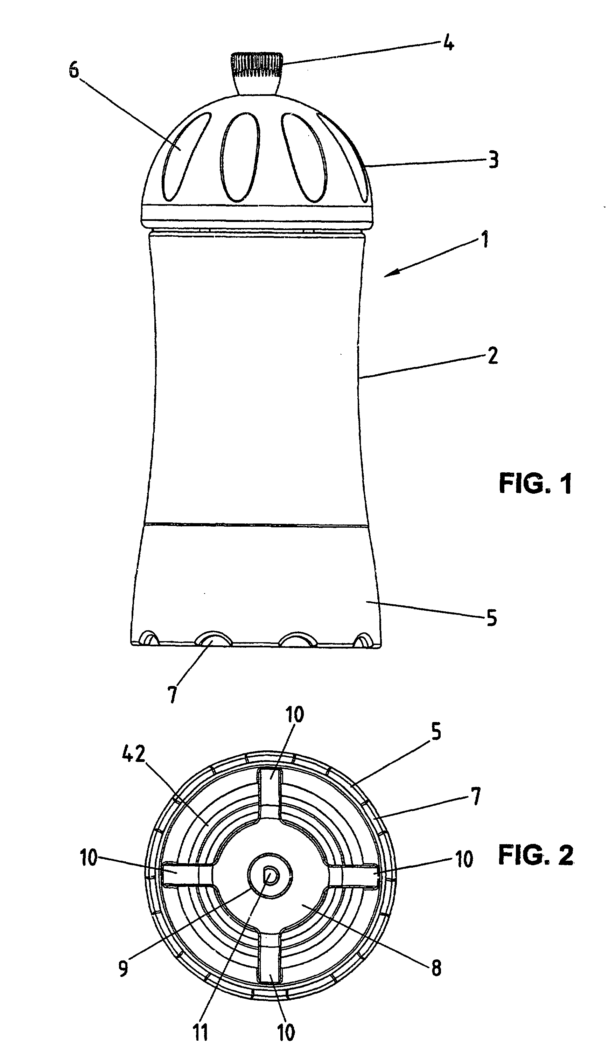

Fig. 1 zeigt eine Seitenansicht der Pfeffermühle 1. Sie umfasst einen mittleren Gehäuseteil 2, der vorzugsweise transparent ausgebildet ist und als Vorratsbehälter für die Pfeffer- resp. Salzkörner dient. Im weiteren ist ein oberer drehbarer Teil 3 vorgesehen, der zur Betätigung der unteren, auf dieser Figur nicht sichtbaren Mahlscheibe dient. Der obere Teil ist als Kappe 3 ausgebildet. Ein Betätigungsknopf 4 aus Metall dient zur Fixierung des oberen Teils 3 und zur Einstellung der Mahlfeinheit. Der untere Gehäuseteil 5 ist am mittleren Gehäuseteil 2 abschraubbar befestigt und erlaubt eine optimale Reinigung des Mahlwerkes. Der obere Teil 3 ist mit Einbuchtungen 6 versehen, die eine bessere Griffigkeit des oberen Teils 3 beim Mahlen ermöglichen. Der untere Gehäuseteil 5 ist an seinem unteren Ende mit Ausnehmungen 7 versehen.

Fig. 2 zeigt eine Ansicht von unten der Pfeffermühle. Unterhalb des aus dieser Figur nicht ersichtlichen Gewindes des unteren Teils ist eine kreisförmige Scheibe 8 mit einer kreisförmigen Öffnung 9 mittels vier senkrecht zueinander stehenden Rippen 10 am Unterteil befestigt. Ersichtlich ist ebenfalls die drehbare Achse 11 zur Betätigung des Mahlwerks. Die Öffnung 9 dient als Lager für die untere Mahlscheibe. Durch die Öffnung 42 zwischen den Rippen 10 kann das gemahlene Gut austreten.

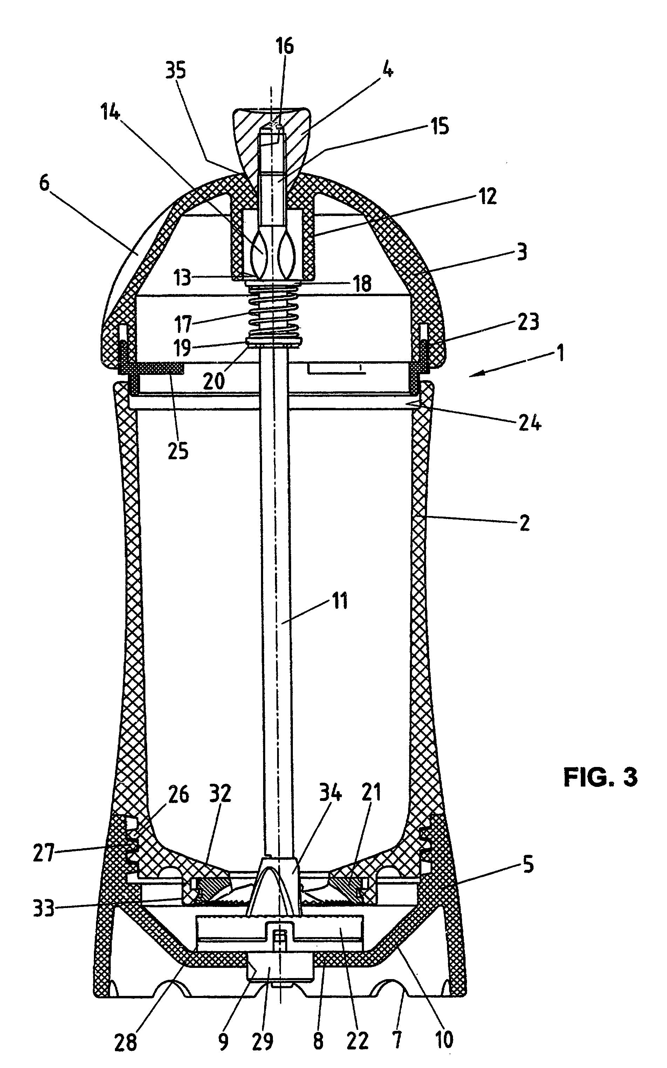

Fig. 3 zeigt einen Längsschnitt durch die Pfeffer- oder Salzmühle 1. Der obere Teil 3 ist in seinem mittleren Bereich mit einem nach unten abstehenden Ansatz 12 mit einer Öffnung 13 zur Halterung von zwei an der Achse 11 angebrachten Mitnehmern 14 versehen. Das obere Ende der Achse 11 ist mit einem Aussengewinde 15 versehen, welches in ein Innengewinde 16 des Betätigungsknopfes 4 einschraubbar ist. Eine Feder 17 ist zwischen zwei Scheiben 18 und 19 zusammenpressbar gehalten, wobei die untere Scheibe 19 mit einem Spannring 20 fest an der Achse 11 befestigt ist. Die obere Scheibe 18 wird an den Ansatz 12 gepresst. Durch die Feder 17 wird eine bessere Einstellung der Mahlfeinheit durch Verändern des Abstandes zwischen der oberen Mahlscheibe 21 und der unteren Mahlscheibe 22 gewährleistet. Die obere Mahlscheibe 21 und die untere Mahlscheibe 22 sind aus Keramik gefertigt und bilden das Mahlwerk 21, 22. Das Mahlwerk wird durch den oberen Teil 3 betätigt. Unten am oberen Teil 3 ist ein Ansatz 23 vorgesehen, der in eine Nut 24 oben im mittleren Gehäuseteil 2 eingeführt wird. Am Ansatz sind aus Fabrikationsgründen drei rechtwinklig von diesem abstehende Laschen 25 vorgesehen. Der mittlere Gehäuseteil ist unten mit einem Aussengewinde 26 versehen, in welches ein Innengewinde 27 des unteren Teils 5 eingeschraubt wird. Die untere Mahlscheibe 22 wird auf einer Kunststoffhalterung 28 gehalten, die mit einem integriert mit dieser ausgebildeten, hohlzylinderförmigen Ansatz 29 versehen ist. Die Halterung 28 wird mit dem Ansatz 29 drehbar in der Öffnung 9 gehalten. Die Mahlscheibe 22 ist in die Halterung 28 eingepresst. Die obere Mahlscheibe 21 ist in einem horizontalen Ansatz 32 und in einem vertikalen Ansatz 33 unten am mittleren Gehäuseteil eingepresst. Die Halterung 28 ist mit einem nach oben abstehenden konischen Teil 34 an der Achse 11 befestigt. Der konische Teil 34 hat gleichzeitig die Funktion, die Pfeffer- oder Salzkörner in den äusseren Bereich der Mahlscheiben, wo sich die Verzahnung befindet, zu leiten.

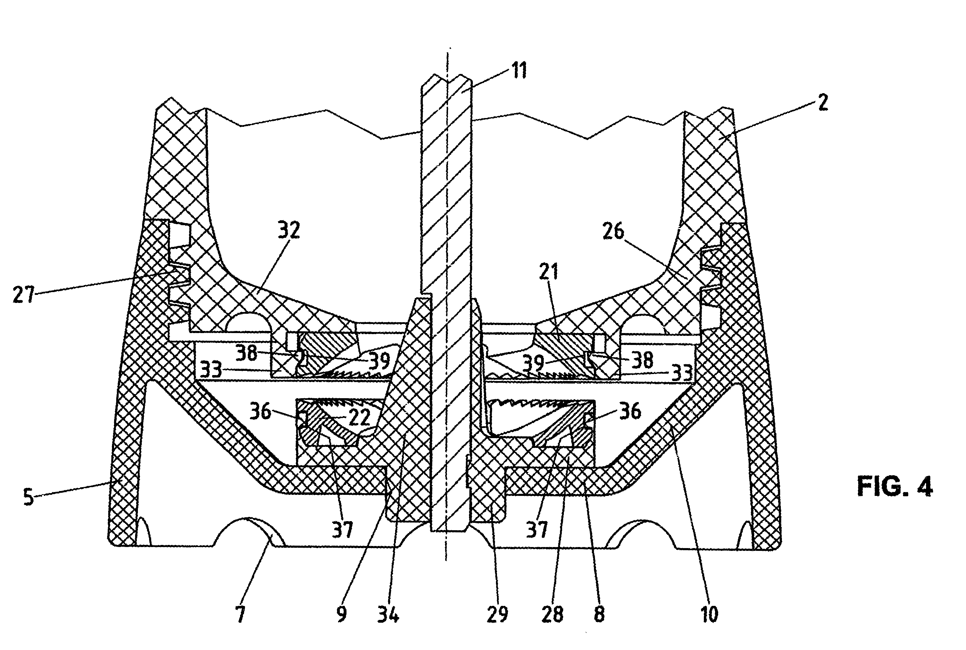

In Fig. 4 ist ein Schnitt durch den unteren Bereich der Pfeffermühle und ebenfalls durch die untere Mahlscheibe in vergrössertem Massstab gegenüber demjenigen gemäss Fig. 3 dargestellt. Aus dieser Figur sind die aussen an der Halterung 28 vorgesehenen Nocken 36 ersichtlich, die in Ausnehmungen 37 der unteren Keramikmahlscheibe 22 eingreifen. Am vertikalen Ansatz 33 des mittleren Gehäuseteils 2 sind ebenfalls nach innen abstehende Nocken 38 vorgesehen, die in Ausnehmungen 39 der oberen Keramikmahlscheibe 21 eingreifen.

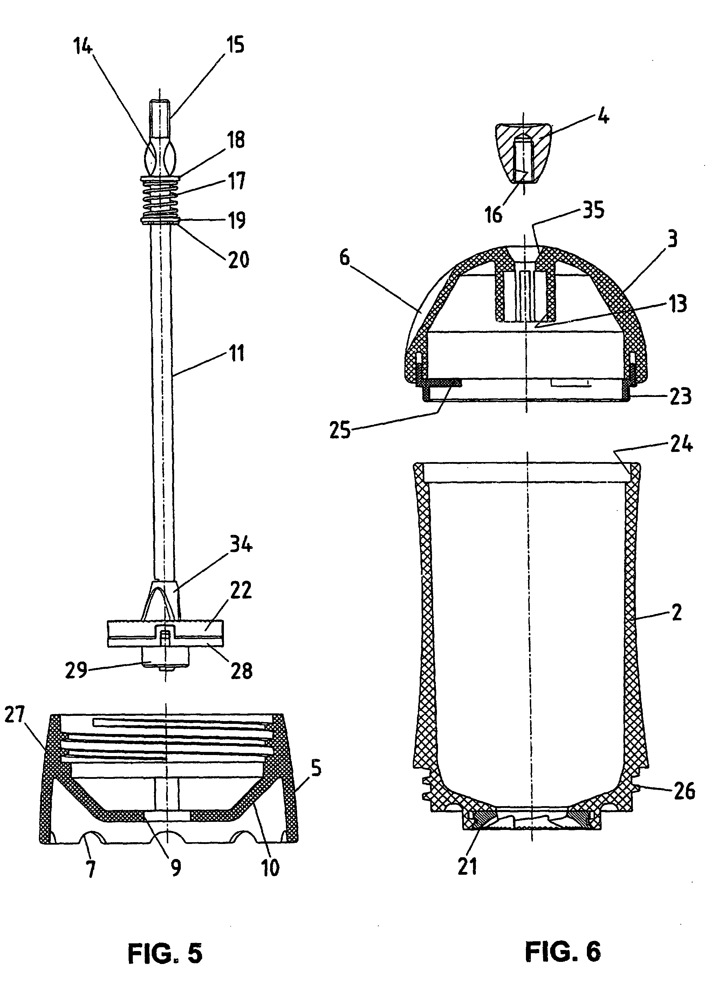

Fig. 5 zeigt einen Schnitt durch den unteren Gehäuseteil 5 der Pfeffer- oder Salzmühle und eine Ansicht der Drehachse mit der an ihrem unteren Ende befestigten unteren Mahlscheibe 22.

Fig. 6 zeigt einen Schnitt durch den mittleren Gehäuseteil 2, den oberen Teil 3 und den Betätigungsknopf 4 der Pfeffer- oder Salzmühle in Explosionsansicht. Unten im mittleren Gehäuseteil 2 ist die obere Mahlscheibe 21 befestigt.

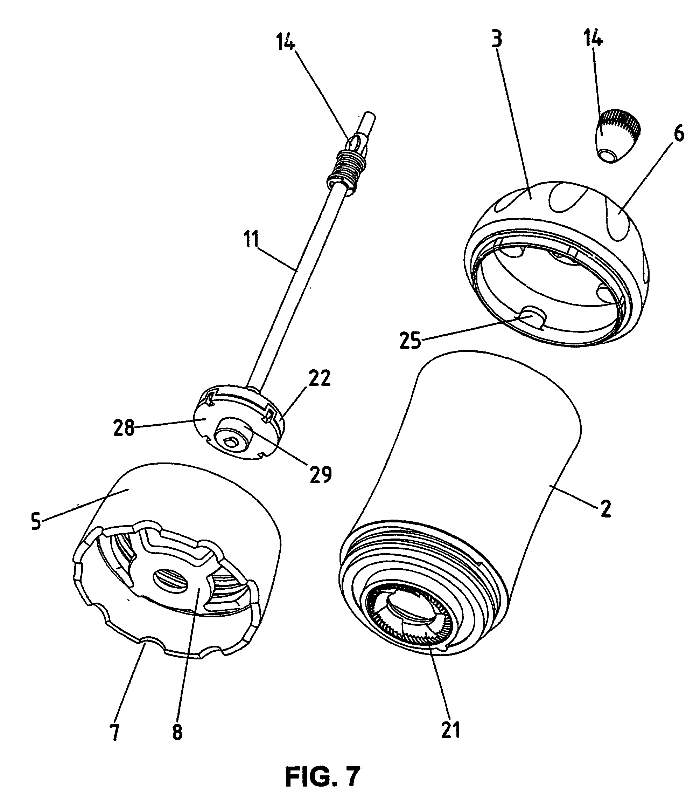

Fig. 7 zeigt in perspektivischer Explosionsansicht sämtliche Teile der Pfeffer- oder Salzmühle.

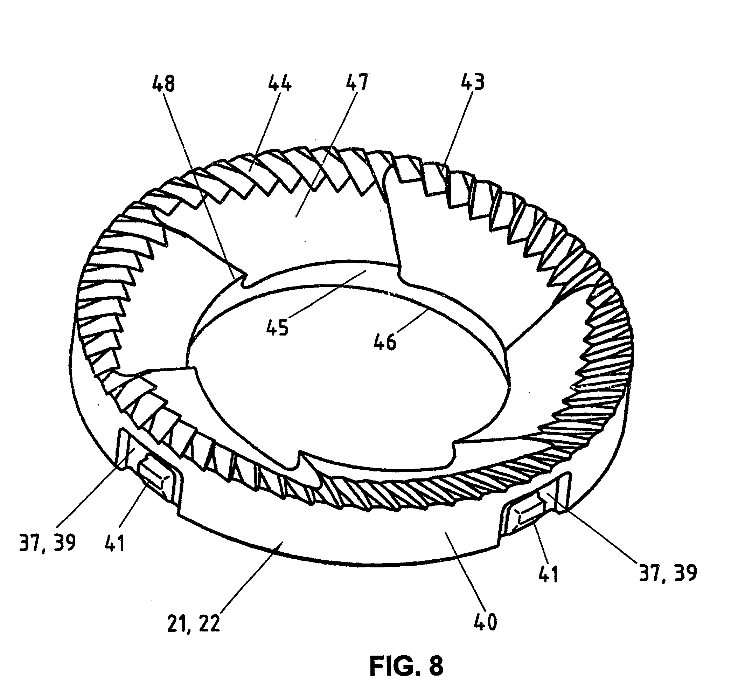

Fig. 8 zeigt in perspektivischer Darstellung eine der beiden identischen kreisförmigen Mahlscheiben aus Keramikmaterial. Am äusseren Rand 40 der Mahlscheiben sind vier in regelmässigem Abstand angeordnete Ansätze 41 vorgesehen. In die Vertiefungen 37, 39 greifen die Nocken 36 resp. 38 der Halterung 28 resp. des mittleren Gehäuseteils 2 ein und bilden einen Schnappverschluss. Am äusseren oberen Rand 43 der Mahlscheibe 21, 22 sind die Mahlzähne 44 angeordnet. Von den Mahlzähnen weg in Richtung zu einer konzentrisch zum äusseren oberen Rand 43 der Mahlscheibe angeordneten kreisförmigen Öffnung 45 erstrecken sich zur Unterseite 46 der Mahlscheibe geneigte Flächen 47. Die schrägen Flächen 47 sind an ihren Enden mit Kanten 48 versehen. Durch die schrägen Flächen 47 und die Kanten 48 werden die Pfeffer- oder Salzkörner vom Zentrum weg zu den Mahlzähnen 44 geführt.

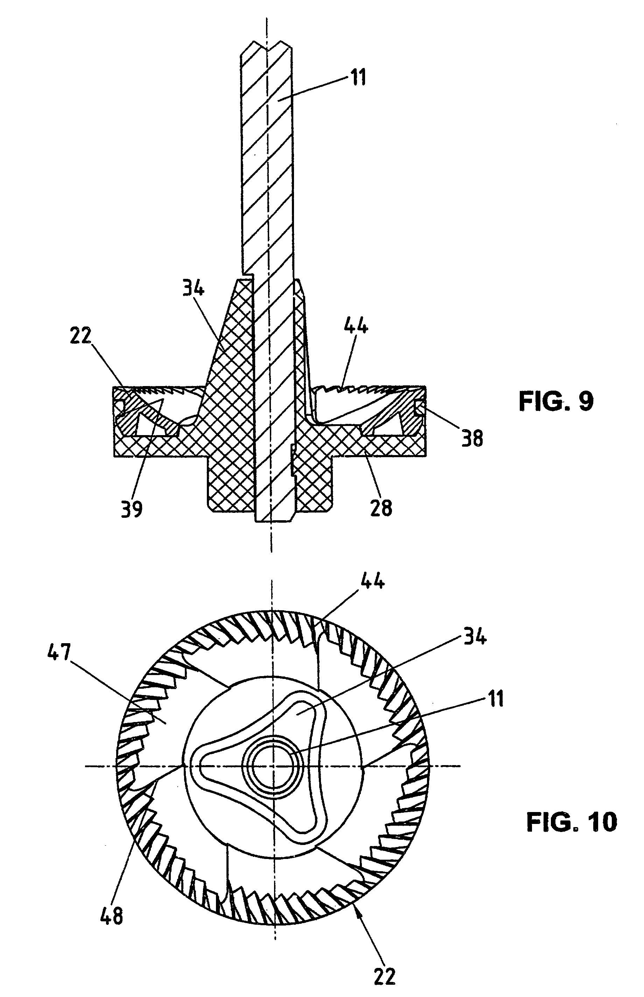

Fig. 9 zeigt einen Schnitt durch den unteren Teil der Achse 11 und die daran befestigte Halterung 28 für die untere Mahlscheibe 22 sowie die untere Mahlscheibe 22.

Fig. 10 zeigt eine Draufsicht auf die an der Achse 11 montierte untere Mahlscheibe 22.

## Patentansprüche

1. Mühle (1), insbesondere für Pfeffer oder Salz, mit einem mittleren Gehäuseteil (2) zur Aufnahme des Mahlgutes und einem oberen Teil (3) zur Betätigung des Mahlwerks (21, 22) und mit einem Befestigungs- und Verstellorgan (4) zur Befestigung des oberen Teils (3) und zur Einstellung des Mahlgrades, wobei unten am mittleren Gehäuseteil (2) eine obere Mahlscheibe (21) angeordnet ist, **dadurch gekennzeichnet, dass** unten am mittleren Gehäuseteil (2) ein abnehmbar befestigbarer unterer Gehäuseteil (5) vorgesehen ist, auf dem eine untere Mahlscheibe (22), die über ein Verbindungsorgan (11) mit dem Befestigungs- und Verstellorgan lösbar verbunden ist, drehbar gelagert ist.

2. Mühle nach Patentanspruch 1, **dadurch gekennzeichnet, dass** der mittlere Gehäuseteil (2) unten mit einem Aussengewinde (26) und der untere Gehäuseteil (5) oben mit einem Innengewinde (16) versehen ist.

3. Mühle nach einem der vorangehenden Patentansprüche, **dadurch gekennzeichnet, dass** das als Drehachse ausgebildete Verbindungsorgan (11) oben mit einem Aussengewinde (15) versehen ist, welches in ein Innengewinde (16) des Befestigungs- und Verstellorgans (4) einschraubbar ist, zwecks Befestigung des oberen Teils (3) am mittleren Gehäuseteil (2) und zwecks Einstellung der Distanz der Mahlscheiben (21, 22) zueinander.

4. Mühle nach einem der vorangehenden Patentansprüche, **dadurch gekennzeichnet, dass** im oberen Bereich der Drehachse (11) eine Feder (17) zwischen einer mit der Drehachse (11) verbundenen ersten Scheibe (19) und einer auf der Drehachse (11) verschiebbaren zweiten Scheibe (18) gelagert ist.

5. Mühle nach einem der vorangehenden Patentansprüche, **dadurch gekennzeichnet, dass** die Halterung für die untere Mahlscheibe (22) einen scheibenförmigen Teil (28) mit einem nach unten abstehenden hohlzylinderförmigen ersten Ansatz (29) zur Lagerung in einer mit dem unteren Gehäuseteil (5) verbundenen Scheibe (8) und einen nach oben abstehenden, konischen zweiten Ansatz (34) zur Befestigung der Drehachse (11) umfasst.

6. Mühle nach einem der vorangehenden Patentansprüche, **dadurch gekennzeichnet, dass** die Mahlscheiben (21, 22) aus Keramikmaterial bestehen.

7. Mühle nach einem der vorangehenden Patentansprüche, **dadurch gekennzeichnet, dass** die Mahlscheiben (21, 22) identisch ausgebildet sind.

8. Mühle nach einem der vorangehenden Patentansprüche, **dadurch gekennzeichnet, dass** die Mahlscheiben (21, 22) im Randbereich (43) mit Zähnen (44) und in einem sich von den Zähnen (44) zu einer zentrischen Öffnung (45) erstreckenden Bereich (47, 48) mit zu einer unteren Fläche (46) der Mahlscheibe schräg angeordnete Flächen (47) mit Kanten (48) zum Transport der Pfeffer- oder Salzkörner aus dem Vorratsbehälter (2) zu den Mahlzähnen (44) versehen sind.

## Claims

1. Mill (1), in particular for pepper or salt, with a middle housing part (2) (2) for receiving the material to be ground and an upper part (3) for actuating the grinding gear (21, 22), and with an attachment and adjustment element (4) for attaching the upper part (3) and for adjusting the degree of grinding, an upper grinding wheel (21) being disposed underneath on the middle housing part (2), **characterised in that** provided underneath on the middle housing part (2) is a removable, attachable lower housing part (5) on which a lower grinding wheel (22), which is releasably connected to the attachment and adjustment element via a connecting element (11), is rotatably supported.

2. Mill according to claim 1, **characterised in that** the middle housing part (2) is provided with an outer threading (26) at the bottom, and the lower housing part (5) is provided with an inner threading (16) at the top.

3. Mill according to one of the preceding claims, **characterised in that** the connecting element (11) designed as a pivot pin is provided with an outer threading (15) at the top, which is screwable into an inner threading (16) of the attachment and adjustment element (4) for the purpose of fastening the upper part (3) to the middle housing part (2) and for the purpose of adjusting the spacing of the grinding wheels (21, 22) to one another.

4. Mill according to one of the preceding claims, **characterised in that** a spring (17) is disposed in the upper region of the pivot pin (11) between a first disk (19), connected to the pivot pin (11), and a second disk (18), displaceable on the pivot pin (11).

5. Mill according to one of the preceding claims, **characterised in that** the mounting for the lower grinding wheel (22) comprises a disk-shaped part (28) with a downwardly protruding hollow-cylindrical first extension (29) for bearing in a disk (8) connected to the lower housing part (5), and an upwardly protruding conical second extension (34) for fastening of the pivot pin (11).

6. Mill according to one of the preceding claims, **characterised in that** the grinding wheels (21, 22) are made of ceramic material.

7. Mill according to one of the preceding claims, **characterised in that** the grinding wheels (21, 22) are of identical design.

8. Mill according to one of the preceding claims, **characterised in that** the grinding wheels (21, 22) are provided with teeth (44) in the edge region (43), and in a region (47, 48) extending from the teeth (44) to a central aperture (45) with surfaces (47), disposed inclined toward a lower surface (46) of the grinding wheel, having edges (48) for transport of the pepper corns or salt grains from the reservoir (2) to the grinding teeth (44).

## Revendications

1. Moulin (1), en particulier pour le poivre ou le sel, comprenant une partie de boîtier médiane (2) pour recueillir la poudre et une partie supérieure (3) pour actionner le mécanisme de moulure (21, 22) et un organe de fixation et de réglage (4) pour la fixation de la partie supérieure (3) et pour le réglage du degré de moulure, un disque de moulure supérieur (21) étant disposé sur la partie de boîtier médiane (2), **caractérisé en ce qu'**il est prévu en bas sur la partie de boîtier médiane (2) une partie de boîtier (5) inférieure fixé de manière amovible sur laquelle est logée de manière rotative un disque inférieur de moulure (22) qui est relié par un organe de liaison (11) à l'organe de fixation et de réglage.

2. Moulin selon la revendication 1, **caractérisé en ce que** la partie de boîtier médiane (2) est munie en bas d'un filet mâle (26) et la partie de boîtier inférieure (5) en haut d'un filet femelle (16).

3. Moulin selon l'une des revendications précédentes, **caractérisé en ce que** l'organe de liaison (11) réalisé comme un organe de rotation est muni en haut d'un filet mâle (15), lequel peut être vissé dans un filet femelle (16) de l'organe de fixation et de réglage (4) pour fixer la partie supérieure (3) sur la partie médiane de boîtier (2) et pour régler la distance des disques de moulure (21, 22) entre eux.

4. Moulin selon l'une des revendications précédentes, **caractérisé en ce que** dans la zone supérieure de l'axe de rotation (11) est logé un ressort (17) entre un premier disque (19) relié à l'axe de rotation (11) et un second disque (18) mobile sur l'axe de rotation (11).

5. Moulin selon l'une des revendications précédentes, **caractérisé en ce que** la fixation pour le disque de moulure inférieur (22) comprend une première partie en forme de disque (28) avec une première butée creuse cylindrique (29) faisant saillie vers le bas pour le logement dans un disque (8), reliée à la partie de boîtier inférieure (5) et une seconde butée conique (34) faisant saillie vers le haut pour la fixation de l'axe de rotation (11).

6. Moulin selon l'une des revendications précédentes, **caractérisé en ce que** les disques de moulures (21, 22) se composent de céramique.

7. Moulin selon l'une des revendications précédentes, **caractérisé en ce que** les disques de moulure (21, 22) sont identiques.

8. Moulin selon l'une des revendications précédentes, **caractérisé en ce que** les disques de moulure (21, 22) sont munis dans la zone de bordure (43) de dents (44) et, dans une zone (47, 48) s'étendant des dents (44) à une ouverture centralisée (45), de surfaces (47) disposées de manière inclinée par rapport à une surface inférieure (46) du disque de moulure, et de bords (48) pour le transport des grains de poivre ou de sel depuis le réservoir (2) aux dent de moulure (44).
